# EUROPÄISCHE PATENTSCHRIFT

(11) **EP 3 665 464 B1**
(45) Veröffentlichungstag und Bekanntmachung des Hinweises auf die Patenterteilung: **08.09.2021**
(21) Anmeldenummer: 18753138.9
(22) Anmeldetag: 07.08.2018
(51) Int. Cl.: G01M 7/08, G01M 99/00

(54) **CRASHTESTVERFAHREN FÜR FLUGZEUGSITZE**
CRASHTEST FOR AIRPLANE SEATS
CRASHTEST POUR SIÈGES D'AVION

(30) Priorität: 08.08.2017 DE 102017118019
(43) Veröffentlichungstag der Anmeldung: 17.06.2020
(73) Patentinhaber: Recaro Aircraft Seating GmbH & Co. KG, 74523 Schwäbisch Hall (DE)
(72) Erfinder: DAHER, Mohammed, 71334 Waiblingen (DE); WAGNER, Andreas, 95326 Kulmbach (DE); SPELSBERG-KORSPETER, Gottfried, 74523 Schwäbisch Hall (DE); FABIG, Joachim, 69151 Neckargemünd (DE); MÜLLER, Klaus, M., 74538 Rosengarten (DE)
(74) Vertreter: Daub, Thomas
(86) Internationale Anmeldenummer: PCT/EP2018/071408
(87) Internationale Veröffentlichungsnummer: WO 2019/030231

(56) Entgegenhaltungen:
- WO-A2-2011/020868
- JP-A- 2015 010 864
- Easa: "CS-25.562", , 19. September 2007 (2007-09-19), XP055502572, Gefunden im Internet: URL:file:///C:/Users/CK53051/Desktop/Certi fication%20Specifications%20for%20Large%20 Aeroplanes%20(CS-25).pdf [gefunden am 2018-08-28]

## Beschreibung

### Stand der Technik

Die Erfindung betrifft ein Crashtestverfahren für Flugzeugsitze nach dem Oberbegriff des Patentanspruchs 1 und eine Testvorrichtung für ein Crashtestverfahren nach dem Anspruch 9.

Es sind bereits Crashtestverfahren für Flugzeugsitze, in denen ein Testschlitten entlang einer Führungsbahn in einer Testrichtung beschleunigt wird, um starke Beschleunigungen auf Flugzeugsitze und auf Flugzeugsitzen sitzende Passagiere zu simulieren, vorgeschlagen worden.

Aus der Druckschrift WO 2011/020868 A2 ist bereits ein Crashtestverfahren vorgeschlagen worden, bei dem ein Testschlitten entlang einer Führungsbahn in einer Testrichtung beschleunigt wird, um starke Beschleunigungen auf ein Testobjekt, wie insbesondere einen Testdummy, zu simulieren.

Aus der Druckschrift JP 2015 010864 A ist bereits ein Crashtestverfahren vorgeschlagen worden, bei dem ein Testschlitten entlang einer Führungsbahn in einer Testrichtung beschleunigt wird, um starke Beschleunigungen auf ein Testobjekt, wie insbesondere einen Testdummy, zu simulieren.

Die Aufgabe der Erfindung besteht insbesondere darin, ein besonders vorteilhaftes Crashtestverfahren mit verbesserten Eigenschaften hinsichtlich einer Flexibilität und bezüglich der Kosten bereitzustellen. Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können.

### Vorteile der Erfindung

Die Erfindung geht aus von einem Crashtestverfahren für Flugzeugsitze, in dem ein Testschlitten entlang einer Führungsbahn in einer Testrichtung beschleunigt wird, um starke Beschleunigungen auf Flugzeugsitze und auf Flugzeugsitzen sitzende Passagiere zu simulieren.

Es wird vorgeschlagen, dass auf dem Testschlitten wenigstens zwei Targetsitze angeordnet werden, wobei Sitzrichtungen der wenigstens zwei Targetsitze Winkel zu der Testrichtung aufweisen. Unter einem "Crashtestverfahren für einen Flugzeugsitz" soll dabei insbesondere ein Beschleunigungstest, insbesondere ein sogenannter HIC-Test (Head Injury Criterion-Test) verstanden werden, in dem eine Aufprallenergie, die bei einem Aufprall eines Crashtestdummys, insbesondere eines Kopfs des Crashtestdummys, auf einem Sitzbauteil eines als Targetsitz ausgebildeten Flugzeugsitzes wirkt, ermittelt wird. Ein Crashtestverfahren ist dabei insbesondere entsprechend der Norm CS25.562 ausgebildet. Dazu wird ein hinter einem fest montierten Targetsitz angeordneter Crashtestdummy, insbesondere ein Crashtestdummy, der auf einem als Launchsitz ausgebildeten Flugzeugsitz in einer aufrechten Sitzposition angeordnet ist, zusammen mit dem Targetsitz in einer Testrichtung auf eine Testgeschwindigkeit beschleunigt und in einem Testbereich abrupt verzögert, wodurch der Crashtestdummy durch seine Massenträgheit auf ein Sitzbauteil des ihm vorgelagerten Targetsitzes auftrifft, um so entsprechend starke negative, auf den Crashtestdummy wirkende Beschleunigungen in einem Crashfall zu simulieren. Grundsätzlich ist es auch denkbar, dass in dem Crashtestverfahren die Targetsitze sowie die Crashtestdummys entgegen der Testrichtung auf dem Testschlitten angeordnet werden und eine Anfangsbeschleunigung des Testschlittens als eine negative Beschleunigung auf die Crashtestdummys wirkt und diese bei der Anfangsbeschleunigung des Testschlittens in Richtung des Targetsitzes beschleunigt werden. Ein Crashtestverfahren für einen Flugzeugsitz wird dabei mittels einer Testvorrichtung durchgeführt. Unter einer "Testvorrichtung" soll dabei eine Vorrichtung verstanden werden, die zumindest eine Führungsbahn und einen entlang der Führungsbahn verschiebbaren Wagen aufweist, der über einen Antriebsaggregat entlang der Führungsbahn beschleunigt werden kann. Der verschiebbare Wagen wird dabei entlang der Führungsbahn in einer Testrichtung auf eine Testgeschwindigkeit beschleunigt werden und ist an einem Verzögerungsmodul abrupt abbremsbar. Bei einem entsprechenden Crashtestverfahren werden mehrere als Targetsitze ausgebildete Flugzeugsitze zusammen mit hinter ihnen angeordneten Launchsitzen, auf denen jeweils ein Crashtestdummy vorschriftsmäßig in einer aufrechten Sitzposition angeordnet ist, auf einem Testschlitten fest montiert, der auf dem verschiebbaren Wagen der Testvorrichtung angebracht ist und so entlang der Führungsbahn beschleunigt und an dem Verzögerungsmodul abrupt bis auf einen Stillstand verzögert wird. Unter einem "Crashtestdummy" soll dabei insbesondere ein Testdummy verstanden werden, der einem durchschnittlichen erwachsenen Menschen entspricht. Grundsätzlich ist auch ein anderer, in einer entsprechenden Prüfnorm, insbesondere in der Norm CS 25.562, festgelegter Crashtestdummy denkbar, insbesondere ein Crashtestdummy der einer 5%-Frau entspricht oder ein Crashtestdummy, der einem 95%-Mann entspricht. Grundsätzlich ist auch denkbar, dass der Crashtestdummy für das Crashtestverfahren nicht auf einem als Launchsitz ausgebildeten Flugzeugsitz angeordnet ist, sondern über eine Konstruktion angeordnet ist, die den Crashtestdummy für das Crashtestverfahren in einer äquivalenten Position anbringt, wie dies mit einem als Launchsitz ausgebildeten Flugzeugsitz der Fall wäre. Unter einem "Flugzeugsitz" soll dabei insbesondere ein Sitz verstanden werden, der dazu vorgesehen ist, in einer Flugzeugkabine eines Flugzeugs auf einem Kabinenboden aufgeständert zu werden, und auf dem ein Passagier während eines Flugs sitzen kann. Dabei weist der Flugzeugsitz einen Sitzboden und eine mit dem Sitzboden gekoppelte Rückenlehne auf, wobei die Rückenlehne vorzugsweise verschwenkbar mit dem Sitzboden verbunden ist, wodurch der Flugzeugsitz vorzugsweise in unterschiedliche Funktionsstellungen bewegbar ist. Unter einem "Testschlitten" soll dabei insbesondere ein starrer und stabiler Rahmen verstanden werden, der dazu vorgesehen ist, fest auf einem bewegbaren Wagen einer Testvorrichtung angebracht zu werden, und der wenigstens eine Schlittenaufnahme aufweist, die dazu vorgesehen ist, dass ein Sitzgestell eines Flugzeugsitzes darauf entsprechend einer bekannten Flugzeugsitzanbindung an den Testschlitten anbindbar ist. Der Testschlitten ist dabei vorzugsweise dazu vorgesehen, dass er bei einem Crashtest eines erfindungsbemäßen Crashtestverfahrens formstabil bleibt und nicht deformiert wird. Unter einem "Crashtest" soll dabei insbesondere ein entsprechend dem erfindungsgemäßen Crashtestverfahren durchgeführter Test auf einer entsprechenden Testvorrichtung verstanden werden, bei dem Aufprallkräfte eines Crashtestdummys auf einem Sitzbauteil eines als Targetsitz ausgebildeten Flugzeugsitzes aufgezeichnet werden, um insbesondere für eine Zulassung eines Flugzeugsitzes und oder Sitzbauteile eines Flugzeugsitzes erforderliche Daten zu generieren. Unter einem "Targetsitz" soll dabei insbesondere ein, für einen Crashtest entsprechend dem erfindungsgemäßen Crashtestverfahren vorgesehener Flugzeugsitz verstanden werden, der dazu vorgesehen ist, dass ein Crashtestdummy auf ihm auftrifft. Der Targetsitz weist dazu zumindest ein Sitzbauteil auf, das in dem Crashtest getestet werden soll, wobei zumindest das zu testende Sitzbauteil dabei einem äquivalenten, zur Benutzung in einem Flugzeug vorgesehenen Flugzeugsitz entspricht. Grundsätzlich ist es auch denkbar, dass der Targetsitz mehrere Sitzbauteile aufweist, die einem äquivalenten, zur Benutzung in einem Flugzeug vorgesehenen Flugzeugsitz entsprechen. Grundsätzlich ist es auch denkbar, dass der Targetsitz identisch ist zu einem zur Benutzung in einem Flugzeug vorgesehenen Flugzeugsitz. Unter "wenigstens zwei" soll dabei insbesondere verstanden werden, dass bei einem Crashtest des erfindungsgemäßen Crashtestverfahrens zeitgleich zumindest zwei, vorzugsweise drei oder mehr Targetsitze auf einem Testschlitten fest angeordnet sind. Unter "angeordnet sein" soll dabei insbesondere fest montiert, insbesondere über eine zu einer Anbindung eines Flugzeugsitzes äquivalente Anbindung fest montiert, verstanden werden. Eine Anbindung eines Targetsitzes erfolgt dabei insbesondere über fest auf dem Testschlitten angebrachte Führungsschienen. Darunter, dass die "Targetsitze unterschiedlichen Ausrichtungen aufweisen", soll dabei verstanden werden, dass Sitzrichtungen der zumindest zwei Targetsitze winklig zueinander ausgerichtet sind. Unter "winklig zueinander ausgerichtet" soll dabei insbesondere verstanden werden, dass die Sitzrichtungen der beiden Targetsitze einen Winkel einschließen und insbesondere nicht parallel verlaufen. Die beiden Targetsitze, welche unterschiedliche Ausrichtungen aufweisen, weisen jeweils unterschiedliche Winkel zu der Testrichtung auf. Insbesondere die Sitzrichtungen der beiden Targetsitze weisen dabei unterschiedliche Winkel zu der Testrichtung auf. Dabei ist es denkbar, dass die Winkel zwischen den Sitzrichtungen beider Targetsitze und der Testrichtung einen gleichen Betrag aufweisen. Unter "vorgesehen" soll insbesondere speziell ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt. Dadurch kann ein besonders vorteilhaftes Crashtestverfahren bereitgestellt werden, bei dem in einem einzigen Crashtest vorteilhaft viele unterschiedliche Zulassungszonen getestet werden können. Insbesondere kann ein Crashtestverfahren bereitgestellt werden, bei dem eine besonders gute Reproduzierbarkeit und Qualität der Testergebnisse, insbesondere der erfassbaren Daten, erreicht werden kann. Dadurch kann ein besonders kostengünstiges und variables Crashtestverfahren bereitgestellt werden.

Weiter wird vorgeschlagen, dass auf dem Testschlitten wenigstens ein als Einzelsitz ausgebildeter Targetsitz angeordnet wird. Unter einem "Einzelsitz" soll dabei insbesondere ein Sitz verstanden werden, der zumindest ein eigenes Sitzgestell aufweist, mittels dessen er auf dem Testschlitten aufgeständert ist. Ein als Einzelsitz ausgebildeter Sitz weist dazu insbesondere zwei Sitzfüße, die jeweils in einer Anbindungsschiene fest angebunden sind, zumindest einen, vorzugsweise zwei mit den Sitzfüßen gekoppelte Querträger und mit den Querträgern und/oder den Sitzfüßen gekoppelte Sitzteiler auf. Die beiden Sitzfüße bilden dabei jeweils zusammen einen vorderen Sitzfußteil und einen hinteren Sitzfußteil aus, wodurch jeweils ein einstückiger linker und ein einstückiger rechter Sitzfuß ausgebildet ist. Grundsätzlich ist es aber auch denkbar, dass das Sitzgestell auf jeder Seite je zwei einzelne Sitzfüße aufweist, also jeweils einen vorderen Sitzfuß und einen hinteren Sitzfuß, die über dieselbe Anbindungsschiene angebunden sind. Die als Einzelsitz ausgebildeten Targetsitze weisen dabei vorzugsweise einen Sitzfußabstand auf, der größer ist als ein Sitzfußabstand bei einem äquivalenten, zur Benutzung in einem Flugzeug vorgesehenen Flugzeugsitz. Ein Sitzfußabstand ist dabei der Abstand zwischen den beiden Sitzfüßen, der in einer Querrichtung, die orthogonal zur Sitzrichtung ausgerichtet ist, gemessen wird. Das Sitzgestell ist als eine Aufständereinheit ausgebildet. Unter einer "Aufständereinheit" soll dabei insbesondere eine Einheit verstanden werden, mittels der ein Flugzeugsitz auf einem Kabinenboden eines Flugzeugs oder auf einem Testschlitten aufgeständert ist. In einem montierten Zustand ist die Aufständereinheit fest mit dem Kabinenboden oder dem Testschlitten verbunden. Ein als Einzelsitz ausgebildeter Targetsitz entspricht dabei im Aufbau im Wesentlichen einem mittleren äquivalenten Flugzeugsitz einer entsprechenden Flugzeugsitzreihe aus mehreren Flugzeugsitzen, vorzugsweise einer Flugzeugsitzreihe aus drei Flugzeugsitzen. Insbesondere weist der als Einzelsitz ausgebildete Targetsitz zwei Sitzfüße auf, zwischen denen Sitzbauteile, wie insbesondere eine Rückenlehne und ein Sitzboden, angeordnet sind. Insbesondere weist der als Einzelsitz ausgebildete Targetsitz keinen Überhang, also von einem Sitzfuß frei abstehende Querrohre auf, auf denen der Sitzboden angeordnet ist. Dadurch kann der Targetsitz besonders vorteilhaft kostengünstig ausgebildet werden.

Ferner wird vorgeschlagen, dass auf dem Testschlitten wenigstens drei als Einzelsitze ausgebildete Targetsitze angeordnet werden, die wenigstens zwei unterschiedliche Ausrichtungen aufweisen. Dadurch können die drei Targetsitze besonders vorteilhaft angeordnet werden.

Es wird weiterhin vorgeschlagen, dass die als Einzelsitze ausgebildeten Targetsitze ein standardisiertes Sitzgestell aufweisen. Unter einem "standardisierten Sitzgestell" soll dabei insbesondere ein Sitzgestell verstanden werden, das für zu testende Sitzbauteile verschiedener Flugzeugsitze vorgesehen ist. Dabei weist das standardisierte Sitzgestell einen Sitzfußabstand auf, der größer ist als ein Sitzfußabstand eines zur Anbindung in dem Flugzeug vorgesehenen Flugzeugsitzes. Der Sitzfußabstand des standardisierten Sitzgestells ist dabei zumindest 500 mm, vorteilhaft 600 mm und in einer besonders vorteilhaften Ausgestaltung 750 mm. Grundsätzlich ist es denkbar, dass ein Sitzfußabstand einen beliebigen Wert zwischen 500 mm und 750 mm annimmt. Ein standardisiertes Sitzgestell weist vorzugsweise zwei Sitzteiler auf, die in unterschiedlichen Abständen zueinander befestigbar sind. Die Sitzteiler des standardisierten Sitzgestells sind dabei insbesondere innerhalb der Sitzfüße des Sitzgestells angeordnet. Die verschiebbaren Sitzteiler des standardisierten Sitzgestells sind dabei insbesondere dazu vorgesehen, unterschiedliche, als Rückenlehnen ausgebildete Sitzbauteile an das Sitzgestell anbindbar zu machen, die insbesondere unterschiedliche Anbindungspunkte und/oder Breiten aufweisen. Dadurch können die Targetsitze besonders vorteilhaft kostengünstig ausgebildet werden.

Des Weiteren wird vorgeschlagen, dass hinter einem als Einzelsitz ausgebildeten Targetsitz je ein einzelner Launchsitz angeordnet wird. Unter einem "Launchsitz" soll dabei insbesondere ein für einen Crashtest entsprechend dem erfindungsgemäßen Crashtestverfahren vorgesehener Flugzeugsitz verstanden werden, der dazu vorgesehen ist, dass ein Crashtestdummy auf ihm in einer sitzenden Position angebracht werden kann. Der Launchsitz bildet dazu vorzugsweise eine Sitzfläche, eine Rückenlehnenfläche und ein Rückhaltesystem (Gurtsystem) aus, durch die ein Crashtestdummy in eine aufrechte Sitzposition gebracht werden kann, die einer aufrechten Sitzposition eines Passagiers in einem äquivalenten, zur Benutzung in einem Flugzeug vorgesehenen Flugzeugsitz entspricht. Grundsätzlich ist es auch denkbar, dass der Launchsitz mehrere Sitzbauteile aufweist, die einem äquivalenten, zur Benutzung in einem Flugzeug vorgesehenen Flugzeugsitz entsprechen. Grundsätzlich ist es auch denkbar, dass der Launchsitz identisch ist zu einem zur Benutzung in einem Flugzeug vorgesehenen Flugzeugsitz. Unter "hinter dem Targetsitz angeordnet" soll dabei insbesondere verstanden werden, dass ein vorderes Ende des Launchsitzes einer Rückseite des Targetsitzes zugewandt ist. Die Sitzrichtung des Launchsitzes ist dabei parallel, vorzugsweise insbesondere koaxial zu einer Sitzrichtung des Targetsitzes ausgebildet, dem der Launchsitz zugeordnet ist. Der Launchsitz ist vorzugsweise fluchtend hinter dem Targetsitz angeordnet. Der Launchsitz ist vorzugsweise über dieselben Anbindungsschienen an den Testschlitten angebunden wie der Targetsitz, dem der Launchsitz zugeordnet ist. Grundsätzlich ist es auch denkbar, dass ein Launchsitz mit einem Versatz zu dem Targetsitz angeordnet ist. Dabei ist insbesondere denkbar, dass der Launchsitz einen seitlichen Versatz zu dem Targetsitz von bis zu 3 Zoll aufweist. Ein Versatz zwischen dem Targetsitz und dem Launchsitz wird dabei insbesondere von einer Mittellängsachse des Targetsitzes zu einer Mittellängsachse des Launchsitzes gemessen. Der Launchsitz ist insbesondere in einer Querrichtung, die insbesondere orthogonal zu einer Sitzrichtung ausgerichtet ist, zu dem Targetsitz verschoben. Grundsätzlich ist es ebenso auch denkbar, dass ein Launchsitz winklig zu dem Targetsitz angeordnet ist. Dabei ist insbesondere denkbar, dass der Launchsitz einen Winkelversatz von 1 Grad bis 18 Grad zu dem Targetsitz aufweist. Dabei ist ein Winkelversatz zwischen dem Targetsitz und seinem zugeordneten Launchsitz zwischen den Sitzrichtungen des Launchsitzes und des Targetsitzes gemessen. Dabei ist es grundsätzlich denkbar, dass der Launchsitz sowohl seitlich versetzt als auch winklig zu dem Targetsitz angeordnet ist oder dass der Launchsitz lediglich winklig oder mit einem seitlichen Versatz zu dem Targetsitz angeordnet ist. Dadurch kann ein Crashtestdummy für einen Crashtest besonders einfach und vorteilhaft hinter dem Targetsitz platziert werden.

Weiterhin wird vorgeschlagen, dass der Launchsitz ein standardisiertes, insbesondere versteiftes Sitzgestell aufweist. Unter einem "versteiften Sitzgestell" soll dabei insbesondere ein gegenüber einem Sitzgestell eines äquivalenten, zur Benutzung in einem Flugzeug vorgesehenen Flugzeugsitzes versteiftes Sitzgestell verstanden werden, das insbesondere zusätzliche Versteifungselemente und/oder Materialstärken aufweist, die eine Steifigkeit des Sitzgestells erhöhen. Dadurch kann ein vorteilhafter Launchsitz bereitgestellt werden.

Außerdem wird vorgeschlagen, dass ein Launchsitz wiederverwendet werden kann. Darunter, dass der "Launchsitz wiederverwendet werden kann", soll dabei insbesondere verstanden werden, dass der Launchsitz zumindest in einem zweiten Crashtest entsprechend dem erfindungsgemäßen Crashtestverfahrens nochmals zur Anbringung eines Crashtestdummys verwendet werden kann und dabei insbesondere eine exakt gleiche Sitzposition für den Crashtestdummy bereitstellen kann. Dadurch kann der Launchsitz vorteilhaft mehrfach verwendet werden, wodurch die Kosten für das Crashtestverfahren weiter gesenkt werden können.

Es wird weiter vorgeschlagen, dass auf dem Testschlitten wenigstens zwei hintereinander angeordnete Paare von Targetsitzen und Launchsitzen angeordnet werden, die unterschiedliche Ausrichtungen aufweisen. Unter einem "von einem Launchsitz und einem Targetsitz gebildeten Paar" soll dabei insbesondere ein Paar aus einem Launchsitz und einem Targetsitz verstanden werden, bei dem der Launchsitz und der Targetsitz dieselbe Ausrichtung aufweisen und gemeinsam auf dem Testschlitten aufgeständert sind. Unter "hintereinander angeordneten Paaren" soll dabei insbesondere verstanden werden, dass ein Paar in einem vorderen Bereich und ein zweites Paar in einem hinteren Bereich des Testschlittens angeordnet ist. Dadurch kann eine besonders vorteilhafte Platzierung von Targetsitzen und Launchsitzen auf dem Testschlitten erreicht werden.

Ferner wird eine Testvorrichtung für ein Crashtestverfahren vorgeschlagen, wobei der Test-schlitten wenigstens eine Schlittenaufnahme aufweist, auf der wenigstens zwei Targetsitze montiert sind, wobei Sitzrichtungen der wenigstens zwei Targetsitze jeweils unterschiedliche Winkel zu einer Testrichtung aufweisen. Dadurch kann ein besonders vorteilhafter Testschlitten für das erfindungsgemäße Crashtestverfahren bereitgestellt werden. Zudem wird vorgeschlagen, dass die Schlittenaufnahme dazu vorgesehen ist, wenigstens zwei Paare von Targetsitzen und Launchsitzen hintereinander in unterschiedlichen Ausrichtungen anzubinden. Dadurch kann der Testschlitten besonders vorteilhaft für ein besonders effizientes Crashtestverfahren bereitgestellt werden.

Das erfindungsgemäße Crashtestverfahren und die erfindungsgemäße Testvorrichtung sollen hierbei nicht auf die oben beschriebene Anwendung und Ausführungsform beschränkt sein. Insbesondere kann das erfindungsgemäße Crashtestverfahren und die erfindungsgemäße Testvorrichtung zu einer Erfüllung einer hierin beschriebenen Funktionsweise eine von einer hierin genannten Anzahl von einzelnen Elementen, Bauteilen und Einheiten abweichende Anzahl aufweisen.

### Zeichnungen

Weitere Vorteile ergeben sich aus der folgenden Zeichnungsbeschreibung. In der Zeichnung sind drei Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine schematische Darstellung eines Testschlittens für ein erfindungsgemäßes Crashtestverfahren in einem ersten Ausführungsbeispiel,
- Fig. 2: eine schematische Draufsicht auf den Testschlitten für das erfindungsgemäße Crashtestverfahren,
- Fig. 3: eine schematische Draufsicht auf einen Testschlitten für ein erfindungsgemäßes Crashtestverfahren in einem zweiten Ausführungsbeispiel und
- Fig. 4: eine schematische Draufsicht auf einen Testschlitten für ein erfindungsgemäßes Crashtestverfahren in einem dritten Ausführungsbeispiel.

### Beschreibung der Ausführungsbeispiele

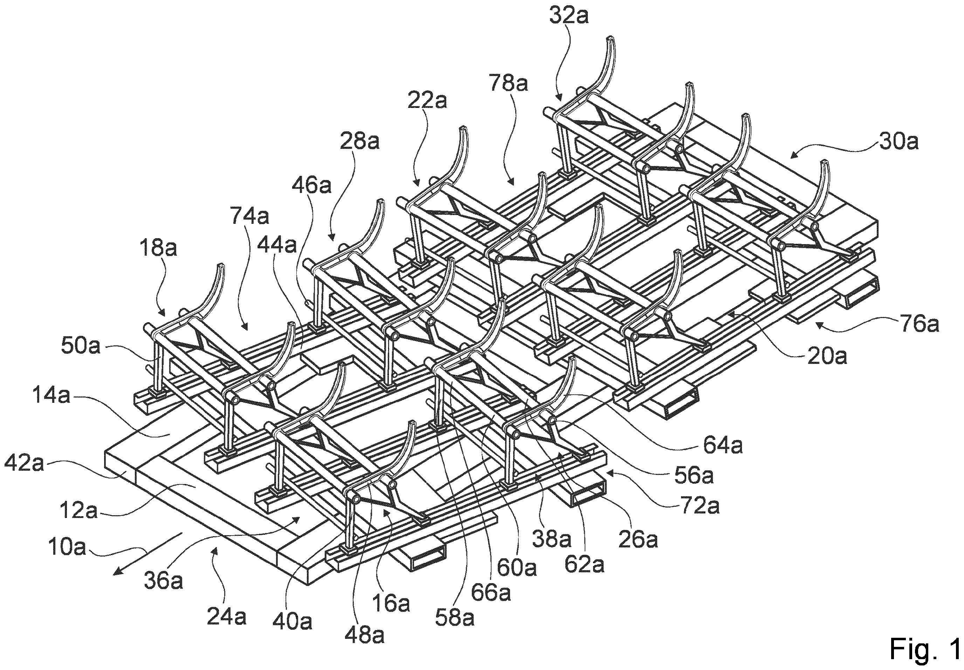

In den Figuren 1 bis 2 ist eine schematische Darstellung eines Testschlittens für ein erfindungsgemäßes Crashtestverfahren dargestellt. Das Crashtestverfahren ist für einen Zulassungstest von Flugzeugsitzen vorgesehen. Das Crashtestverfahren ist insbesondere dazu vorgesehen, HIC-Tests (Head Injury Criterion-Tests) an Flugzeugsitzen durchzuführen. Mittels des erfindungsgemäßen Crashtestverfahrens werden starke Beschleunigungen auf Flugzeugsitze und auf Flugzeugsitzen sitzende Passagiere simuliert. Insbesondere werden bei dem Crashtestverfahren auf ein Crashtestdummy 34a wirkende Beschleunigungskräfte gemessen. Bei dem Crashtestverfahren werden zulassungsbedingende Daten erfasst. Das Crashtestverfahren wird auf einer nicht näher dargestellten Testvorrichtung durchgeführt. Die Testvorrichtung entspricht dabei einer aus dem Stand der Technik bekannten Testvorrichtung. Die Testvorrichtung weist dabei Führungsschienen auf, die eine Führungsbahn ausbilden. Die Testvorrichtung weist weiter einen verschiebbar auf den Führungsschienen gelagerten Wagen auf, der entlang der Führungsbahn auf den Führungsschienen verschoben werden kann. Die Testvorrichtung weist eine Antriebseinheit auf, die den verschiebbar gelagerten Wagen beschleunigen und entlang der von den Führungsschienen ausgebildeten Führungsbahn bewegen kann. Die Führungsbahn der Testvorrichtung ist in einer Testrichtung 10a ausgerichtet. Die Testrichtung 10a ist als die Richtung ausgebildet, in der die zu testenden Flugzeugsitze beschleunigt werden. Die Testvorrichtung weist ein Verzögerungsmodul auf, an dem der verschiebbar gelagerte Wagen abrupt abgebremst werden kann. Das Verzögerungsmodul ist dabei als ein Anschlag an einem Ende der Führungsschienen ausgebildet. Das als Anschlag ausgebildete Verzögerungsmodul ist dazu vorgesehen, dass der auf den Führungsschienen verschiebbare Wagen anschlägt, wenn er entlang der Testrichtung 10a an einem Ende der Führungsschienen angelangt ist.

Erfindungsgemäß wird ein Testschlitten 12a vorgeschlagen. Der Testschlitten 12a ist dazu vorgesehen, auf der Testvorrichtung angebracht zu werden. Der Testschlitten 12a ist dazu vorgesehen, fest und starr mit dem verschiebbar gelagerten Wagen der Testvorrichtung verbunden zu werden. Der Testschlitten 12a wird dabei über eine dem Fachmann aus dem Stand der Technik bekannte Weise mit dem beweglichen Wagen der Testvorrichtung verbunden. Der Testschlitten 12a weist ein Grundgestell 14a auf. Das Grundgestell 14a ist von Metallstreben gebildet. Das Grundgestell 14a ist rechteckig ausgebildet. Der Testschlitten 12a weist eine breite Seite und eine schmale Seite auf. Der Testschlitten 12a ist mit seiner breiten Seite parallel zu der Testrichtung 10a ausgerichtet.

Der Testschlitten 12a ist dazu vorgesehen, dass für das Crashtestverfahren mehrere Targetsitze 16a, 18a, 20a, 22a auf dem Testschlitten 12a angebunden werden. Zur Anbindung der Targetsitze 16a, 18a, 20a, 22a weist der Testschlitten 12a eine Schlittenaufnahme 24a auf. Die Schlittenaufnahme 24a ist dazu vorgesehen, dass die Targetsitze 16a, 18a, 20a, 22a fest mit dem Testschlitten 12a verbunden sind. Die Targetsitze 16a, 18a, 20a, 22a sind als Einzelsitze ausgebildet. Die Targetsitze 16a, 18a, 20a, 22a sind unabhängig voneinander mit der Schlittenaufnahme 24a verbunden. Die als Einzelsitze ausgebildeten Targetsitze 16a, 18a, 20a, 22a sind jeweils einzeln und eigenständig auf dem Testschlitten 12a angeordnet. Eine Ausrichtung der als Einzelsitze ausgebildeten Targetsitze 16a, 18a, 20a, 22a zueinander kann variiert werden. Die Targetsitze 16a, 18a, 20a, 22a sind von ihrem Aufbau her im Wesentlichen gleich ausgebildet, weswegen im Folgenden lediglich der Targetsitz 16a näher beschrieben werden soll. Eine Erläuterung der weiteren Targetsitze 18a, 20a, 22a kann der Beschreibung des Targetsitzes 16a entnommen werden. Der Targetsitz 16a weist ein Sitzgestell 36a auf. Der als Einzelsitz ausgebildete Targetsitz 16a weist das Sitzgestell 36a für sich alleine auf. Über das Sitzgestell 36a ist lediglich der Targetsitz 16a an den Testschlitten 12a angebunden. Die weiteren Targetsitze 18a, 20a, 22a weisen jeweils ihr eigenes, in den Figuren nicht angezogenes Sitzgestell auf, das im Wesentlichen äquivalent zu dem Sitzgestell 36a des Targetsitzes 16a ausgebildet ist. Über das Sitzgestell 36a ist der Targetsitz 16a an der Schlittenaufnahmen 24a und damit an dem Testschlitten 12a angebunden. Das Sitzgestell 36a ist als ein standardisiertes Sitzgestell ausgebildet. Das standardisierte Sitzgestell 36a ist dazu vorgesehen, dass unterschiedlich große, insbesondere unterschiedlich breite Targetsitze über das Sitzgestell 36a an den Testschlitten 12a angebunden werden. Das Sitzgestell 36a weist zwei Sitzfußeinheiten 40a, 42a auf. Die Sitzfußeinheiten 40a, 42a bilden jeweils einen vorderen und einen hinteren Sitzfuß aus. Die erste Sitzfußeinheit 40a ist als eine linke Sitzfußeinheit 40a ausgebildet. Die zweite Sitzfußeinheit 42a ist als eine rechte Sitzfußeinheit 42a ausgebildet. Die Sitzfußeinheiten 40a, 42a sind in einer Querrichtung beabstandet zueinander angeordnet. Grundsätzlich ist es denkbar, dass die Sitzfußeinheiten 40a, 42a einen Abstand voneinander aufweisen, der gleich groß oder kleiner ist als ein Abstand zwischen Sitzfußeinheiten eines äquivalent ausgebildeten, zur Montage in einem Flugzeug vorgesehenen Flugzeugsitzes. Vorteilhaft weisen die Sitzfußeinheiten 40a, 42a aber einen Abstand voneinander auf, der größer ist als ein Abstand zwischen Sitzfußeinheiten eines äquivalent ausgebildeten, zur Montage in einem Flugzeug vorgesehenen Flugzeugsitzes. Das Sitzgestell 36a weist zwei Querträger 44a, 46a auf. Die Querträger 44a, 46a sind als Querrohre ausgebildet. Die Querträger 44a, 46a verlaufen in der Querrichtung zwischen den beiden Sitzfußeinheiten 40a, 42a. Der erste Querträger 44a ist als ein vorderer Querträger 44a ausgebildet, der zweite Querträger 46a ist als ein hinterer Querträger 46a ausgebildet. Die Querträger 44a, 46a sind drehfest in entsprechenden Aufnahmen der Sitzfußeinheiten 40a, 42a angebracht. Das Sitzgestell 42a weist zwei Sitzteiler 48a, 50a auf. Die Sitzteiler 48a, 50a sind mit den Querträgern 44a, 46a verbunden. Die Sitzteiler 48a, 50a sind auf einer Innenseite der Sitzfußeinheiten 40a, 42a angeordnet. Die Sitzteiler 48a, 50a sind innerhalb der Sitzfußeinheiten 40a, 42a angeordnet. Die Sitzteiler 48a, 50a können axial auf den Querträgern 44a, 46a zwischen den beiden Sitzfußeinheiten 40a, 42a verschoben werden. In einem fertig montierten Zustand für einen Crashtest sind die Sitzteiler 48a, 50a axial auf den Querträgern 44a, 46a fixiert. Dabei sind die Sitzteiler 48a, 50a über eine dem Fachmann als sinnvoll erscheinende Weise, die von entsprechenden zur Montage in einem Flugzeug vorgesehenen Flugzeugsitzen bekannt ist, mit den Querträgern 44a, 46a fest verbunden. Die Sitzteiler 48a, 50a sind zur Anbindung von Sitzbauteilen unterschiedlich großer Flugzeugsitze dazu vorgesehen, in unterschiedlichen Abständen zueinander auf den Querträgern 44a, 46a fixiert zu werden.

Der Targetsitz 16a weist eine Rückenlehne 52a auf. Die Rückenlehne 52a ist mit dem Sitzgestell 36a verbunden. Die Rückenlehne 52a ist über die Sitzteiler 48a, 50a verschwenkbar mit dem Sitzgestell 36a verbunden. Grundsätzlich wäre es auch denkbar, dass die Rückenlehne 52a starr mit den Sitzteilern 48a, 50a verbunden ist. Die Rückenlehne 52a weist dabei eine Rückseite auf, auf die der Crashtestdummy bei dem Crashtestverfahren auftrifft, die eine symmetrische Ausgestaltung aufweist. Grundsätzlich ist es aber auch denkbar, dass die Rückseite der Rückenlehne 52a eine asymmetrische Ausgestaltung aufweist und beispielsweise lediglich auf einer Seite Zusatzelemente, wie beispielsweise Anschlüsse (USB-Anschluss), einen Kleiderhaken oder andere, dem Fachmann als sinnvoll erscheinende Zusatzelemente aufweist. Der Targetsitz 16a weist eine Verriegelvorrichtung 54a auf. Die Verriegelvorrichtung 54a ist dazu vorgesehen, die verschwenkbare Rückenlehne 52a in unterschiedlichen Stellungen zu dem Sitzgestell 36a zu fixieren. Mittels der Verriegelvorrichtung 54a kann die Rückenlehne 52a zwischen einer Sitzstellung und einer Komfortstellung stufenlos arretiert werden. Die Verriegelvorrichtung 54a ist als ein Hydrolock ausgebildet. Die Verriegelvorrichtung 54a ist an dem linken Sitzteiler 48a angeordnet. Die Verriegelvorrichtung 54a ist dabei teilweise an dem linken Sitzteiler 48a angebunden. Grundsätzlich ist es auch denkbar, dass die Verriegelvorrichtung 54a an dem rechten Sitzteiler 50a angeordnet ist. Durch eine unterschiedliche Anordnung der Verriegelvorrichtung 54a entweder an dem linken Sitzteiler 48a oder dem rechten Sitzteiler 50a, können unterschiedliche Zulassungszonen der Rückenlehne 52a getestet werden, da sich die Rückenlehnen 52a je nach Anordnung der Verriegelvorrichtung 54a bei einem Auftreffen des Crashtestdummys 34a unterschiedlich verhalten. Insbesondere ein Steifigkeitsverlauf der Rückenlehne 52a ist unterschiedlich, je nachdem auf welcher Seite die Verriegelvorrichtung 54a angeordnet ist. Durch die Anbindung der Verriegelungsvorrichtung 54a an einer Seite der Rückenlehne 52a ist die Rückenlehne 52a asymmetrisch an das Sitzgestell 36a, insbesondere die Sitzteiler 48a, 50a, angebunden. Durch die asymmetrische Anbindung verformt sich die Rückenlehne 52a bei gleichem Auftreffbereich des Crashtestdummys 34a je nach Seite der Anbindung der Verriegelvorrichtung 52a anders. Grundsätzlich ist es ebenso denkbar, dass der Targetsitz eine Rückenlehnenaufschlagssicherungsvorrichtung aufweist, die dazu vorgesehen ist, die Rückenlehne 52a in zumindest einem Betriebszustand von dem Sitzgestell 36a teilweise zu entkoppeln. Durch die teilweise Entkopplung der Rückenlehne 52a von dem Sitzgestell 36a können in dem Crashtest die Rückenlehne 52a und das Sitzgestell 36a eine Relativbewegung zueinander ausüben, um so Kräfte, die auf den Crashtestdummy 34a wirken, zu reduzieren. Eine Verringerung der Aufschlagskräfte wird zumindest dadurch erreicht, dass die Rückenlehne 52a durch die zeitweise Entkopplung mit einem oberen Ende nach vorne, in Flugrichtung verschwenkt wird und dadurch zumindest teilweise aus einer Bewegungsbahn des Crashtestdummys 34a herausbewegt wird und zur normalen Sitzstellung nach vorne geneigt ist, wodurch ein Auftreffwinkel und ein Auftreffbereich des Crashtestdummys 34a verändert werden. Grundsätzlich ist es denkbar, dass der Targetsitz 16a weitere Sitzbauteile aufweist, die für einen Crashtest entsprechend dem erfindungsgemäßen Crashtestverfahren an dem Targetsitz 16a, insbesondere der Rückenlehne 52a, befestigt werden. Dabei ist es insbesondere denkbar, dass weitere Sitzbauteile, wie insbesondere Anklapptische, Tablethalter oder Literaturtaschen, an der Rückenlehne 52a für einen Crashtest befestigt werden.

Der Testschlitten 12a ist dazu vorgesehen, dass für das Crashtestverfahren hinter jedem der Targetsitze 16a, 18a, 20a, 22a jeweils ein Launchsitz 26a, 28a, 30a, 32a angeordnet ist. Die Launchsitze 26a, 28a, 30a, 32a sind dazu vorgesehen, dass für das Crashtestverfahren jeweils ein Crashtestdummy 34a auf ihnen angeordnet wird. Dabei wird der Crashtestdummy 34a jeweils in einer aufrechten Sitzposition auf dem entsprechenden Launchsitz 26a, 28a, 30a, 32a angeordnet. Die Crashtestdummys werden dabei über das sitzinterne Rückhaltesystem der Launchsitze 26a, 28a, 30a, 32a an dem entsprechenden Launchsitz 26a, 28a, 30a, 32a befestigt. Die Launchsitze 26a, 28a, 30a, 32a sind äquivalent zu entsprechenden, zur Montage in einem Flugzeug vorgesehenen Flugzeugsitzen ausgebildet. Die Launchsitze 26a, 28a, 30a, 32a sind insbesondere dazu vorgesehen, eine gleiche Sitzposition wie in den entsprechenden, zur Montage in einem Flugzeug vorgesehenen Flugzeugsitzen für den Crashtestdummy 34a bereitzustellen. Die Launchsitze 26a, 28a, 30a, 32a sind im Wesentlichen gleich ausgebildet, weswegen im Folgenden lediglich der Launchsitz 26a näher beschrieben werden soll. Zur Erläuterung der weiteren Launchsitze 28a, 30a, 32a kann die Beschreibung des Launchsitzes 26a herangezogen werden. Der Launchsitz 26a weist ein Sitzgestell 38a auf. Mittels des Sitzgestells 38a ist der Launchsitz 26a fest mit der Schlittenaufnahme 24a und damit dem Testschlitten 12a verbunden. Das Sitzgestell 38a ist als ein standardisiertes Sitzgestell 38a ausgebildet. Dabei ist das standardisierte Sitzgestell 38a dazu vorgesehen, für unterschiedlich große, insbesondere unterschiedlich breite Launchsitze verwendbar zu sein. Das Sitzgestell 38a ist versteift ausgeführt. Das Sitzgestell 38a des Launchsitzes 26a ist gegenüber einem Sitzgestell eines zur Montage in einem Flugzeug vorgesehenen Flugzeugsitzes versteift ausgebildet. Das Sitzgestell des Launchsitzes 26a ist dadurch insbesondere wiederverwendbar ausgebildet. Das Sitzgestell 38a kann für mehrere Crashtests entsprechend dem erfindungsgemäßen Crashtestverfahrens verwendet werden. Das Sitzgestell 38a des Launchsitzes 26a weist zwei Sitzfußeinheiten 56a, 58a, zwei mit den Sitzfußeinheiten 56a, 58a verbundene Querträger 60a, 62a und zwei mit den Querträgern 60a, 62a verbundene Sitzteiler 64a, 66a auf. Der Launchsitz 26a umfasst eine Rückenlehne 68a und einen Sitzboden 70a, die mit dem Sitzgestell 38a gekoppelt sind. Der Crashtestdummy 34a ist auf dem Sitzboden 70a sitzend angeordnet.

Die Schlittenaufnahme 24a ist dazu vorgesehen, dass jeweils ein Targetsitz 16a, 18a, 20a, 22a zusammen mit einem Launchsitz 26a, 28a, 30a, 32a als ein Paar auf dem Testschlitten 12a angebunden wird. Die Schlittenaufnahme 24a ist dazu vorgesehen, dass die Targetsitze 16a, 18a, 20a, 22a in unterschiedlichen Ausrichtungen auf dem Testschlitten 12a angeordnet werden können. Ein Paar aus einem Targetsitz 16a, 18a, 20a, 22a und einem Launchsitz 26a, 28a, 30a, 32a ist jeweils in einer Ausrichtung auf dem Testschlitten 12a angeordnet. Ein Targetsitz 16a, 18a, 20a, 22a und ein Launchsitz 26a, 28a, 30a, 32a, die ein Paar bilden, sind jeweils zusammen mit der Schlittenaufnahme 24a angebunden. Für jedes Paar aus einem Targetsitz 16a, 18a, 20a, 22a und einem Launchsitz 26a, 28a, 30a, 32a weist die Schlittenaufnahme 24a ein Anbindungsschienenpaar 72a, 74a, 76a, 78a auf. Jedes Anbindungsschienenpaar 72a, 74a, 76a, 78a weist jeweils zwei parallel verlaufende Anbindungsschienen auf. Die Anbindungsschienen der Anbindungsschienenpaare 72a, 74a, 76a, 78a sind dabei äquivalent zu Anbindungsschienen ausgebildet, die in Flugzeugkabinen angeordnet sind, um dort entsprechende Flugzeugsitze aufzuständern. Die Targetsitze 16a, 18a, 20a, 22a und die Launchsitze 26a, 28a, 30a, 32a sind mit ihren Sitzfußeinheiten 40a, 42a, 56a, 58a fest mit in den Anbindungsschienen der Anbindungsschienenpaare 72a, 74a, 76a, 78a angeordnet. Die Targetsitze 16a, 18a, 20a, 22a und die Launchsitze 26a, 28a, 30a, 32a, die ein Paar ausbilden, sind jeweils in einer Flucht zueinander ausgebildet. Die Targetsitze 16a, 18a, 20a, 22a und die Launchsitze 26a, 28a, 30a, 32a, die ein Paar ausbilden, sind entlang der Anbindungsschienenpaare 72a, 74a, 76a, 78a jeweils deckungsgleich angeordnet. Sitzrichtungen 80a, 82a der Targetsitze 16a, 18a, 20a, 22a und der Launchsitze 26a, 28a, 30a, 32a, die ein Paar ausbilden, sind jeweils koaxial.

Die Targetsitze 16a, 18a, die jeweils mit den Launchsitzen 26a, 28a ein Paar bilden, sind in einem vorderen Bereich des Testschlittens 12a angeordnet. Die Targetsitze 20a, 22a, die jeweils mit den Launchsitzen 30a, 32a ein Paar bilden, sind in einem hinteren Bereich des Testschlittens 12a angeordnet. Grundsätzlich ist auch eine andere Anordnung der Paare von Targetsitzen 16a, 18a, 20a, 22a und Launchsitzen 26a, 28a, 30a, 32a denkbar. Beispielsweise ist denkbar, dass die Targetsitze 16a, 18a, die jeweils mit den Launchsitzen 26a, 28a ein Paar bilden, in dem hinteren Bereich des Testschlittens angeordnet sind und die Targetsitze 20a, 22a, die jeweils mit den Launchsitzen 30a, 32a ein Paar bilden, in dem vorderen Bereich des Testschlittens angeordnet sind. Die in dem hinteren Bereich des Testschlittens 12a angeordneten Paare von Targetsitzen 20a, 22a und Launchsitzen 30a, 32a sind hinter den in dem vorderen Bereich angeordneten Paaren von Targetsitzen 16a, 18a und Launchsitzen 26a, 28a angeordnet. Die in dem vorderen Bereich angeordneten Targetsitze 16a, 18a, und die Launchsitze 26a, 28a sind alle in eine gleiche Richtung ausgerichtet. Die Sitzrichtungen 80a der Targetsitze 16a, 18a und Launchsitze 26a, 28a sind zu der Testrichtung 10a verschwenkt. Die Sitzrichtungen 80a der Targetsitze 16a, 18a und der Launchsitze 26a, 28a schließen mit der Testrichtung 10a einen Winkel von 10 Grad ein. Die Sitzrichtungen 80a der Targetsitze 16a, 18a und der Launchsitze 26a, 28a können dabei, je nach zu testender Zulassungszone, einen Winkel von 1 Grad bis 20 Grad mit der Testrichtung 10a einschließen. Ein Winkel, den die Sitzrichtungen 80a der Targetsitze 16a, 18a und der Launchsitze 26a, 28a mit der Testrichtung 10a einschließen, hängt dabei insbesondere von dem zu testenden Targetsitz 16a, 18a ab, insbesondere von einer kritischen Stelle der Rückenlehne 52a der entsprechenden Targetsitze 16a, 18a. Eine kritische Stelle der Rückenlehne 52a ist dabei eine Stelle, die von einem Testingenieur bestimmt wird und als die Stelle gilt, die bei einem Auftreffen eine größte Gefahr für einen Passagier darstellen würde. Die kritische Stelle ist insbesondere als die Stelle ausgebildet, von der ein entsprechender, für den Crashtest verantwortlicher Testingenieur annimmt, dass sie, wenn der Crashtestdummy 34a bei einem Crashtest darauf auftrifft, die höchsten Beschleunigungen aufweist. Die Anbindungsschienenpaare 72a, 74a zur Anbindung der Targetsitze 16a, 18a und der Launchsitze 26a, 28a sind parallel zueinander ausgerichtet. Die Anbindungsschienenpaare 72a, 74a zur Anbindung der Targetsitze 16a, 18a und der Launchsitze 26a, 28a sind dabei in dem entsprechenden Winkel zu der Testrichtung 10a verschwenkt, um den die Targetsitze 16a, 18a und die Launchsitze 26a, 28a zu der Testrichtung verschwenkt sind. Die in dem hinteren Bereich angeordneten Targetsitze 20a, 22a und die Launchsitze 30a, 32a sind alle in eine gleiche Richtung ausgerichtet. Die Sitzrichtungen 82a der Targetsitze 20a, 22a und der Launchsitze 30a, 32a sind parallel zu der Testrichtung 10a ausgerichtet. Dazu sind die Anbindungsschienenpaare 76a, 78a zur Anbindung der Targetsitze 20a, 22a und der Launchsitze 30a, 32a parallel zur Testrichtung 10a angeordnet.

Bei dem erfindungsgemäßen Crashtestverfahren weisen zwei der vier Targetsitze 16a, 18a, 20a, 22a unterschiedliche Ausrichtungen auf. Die zwei vorderen Targetsitze 16a, 18a weisen eine zu der Testrichtung 10a geneigte Ausrichtung auf. Die Sitzrichtungen der Targetsitze 16a, 18a sind zu der Testrichtung 10a geneigt. Die beiden vorderen Targetsitze 16a, 18a weisen dabei eine gleiche Ausrichtung auf. Die beiden vorderen Targetsitze 16a, 18a verlaufen parallel zueinander. Grundsätzlich wäre es auch denkbar, dass die beiden vorderen Targetsitze 16a, 18a unterschiedliche Ausrichtungen aufweisen. Die zwei hinteren Targetsitze 20a, 22a weisen eine zu der Testrichtung 10a parallel verlaufende Ausrichtung auf. Die zwei hinteren Targetsitze 20a, 22a weisen eine unterschiedliche Ausrichtung zu den vorderen Targetsitzen 16a, 18a auf. Bei den vorderen Targetsitzen 16a, 18a sind die entsprechenden Verriegelvorrichtungen 54a jeweils auf gegenüberliegenden Seiten angeordnet. Dadurch können mit den zwei vorderen Targetsitzen 16a, 18a zwei unterschiedliche Zulassungszonen getestet werden. Bei den hinteren Targetsitzen 20a, 22a sind die entsprechenden Verriegelvorrichtungen 54a jeweils auf gegenüberliegenden Seiten angeordnet. Dadurch können mit den vorderen zwei Targetsitzen 20a, 22a ebenfalls zwei unterschiedliche Zulassungszonen getestet werden. Dadurch können mittels der vier Targetsitze 16a, 18a, 20a, 22a bei einem Crashtest vier unterschiedliche Zulassungszonen getestet werden. Dadurch kann ein Crashtest, der entsprechend dem erfindungsgemäßen Crashtestverfahren durchgeführt wird, besonders vorteilhaft zur Ermittlung von Daten bezüglich vier Zulassungszonen genutzt werden. Dadurch kann, insbesondere im Gegensatz zum Stand der Technik, verhindert werden, dass zur Ermittlung von Daten zu vier Zulassungszonen zwei oder mehr Crashtests durchgeführt werden müssen. Hinter jedem der Targetsitze 16a, 18a, 20a, 22a wird jeweils beabstandet ein Launchsitz 26a, 28a, 30a, 32a angeordnet. Auf jedem der Launchsitze 26a, 28a, 30a, 32a ist bei einem Crashtest entsprechend dem Crashtestverfahren ein Crashtestdummy 34a angeordnet.

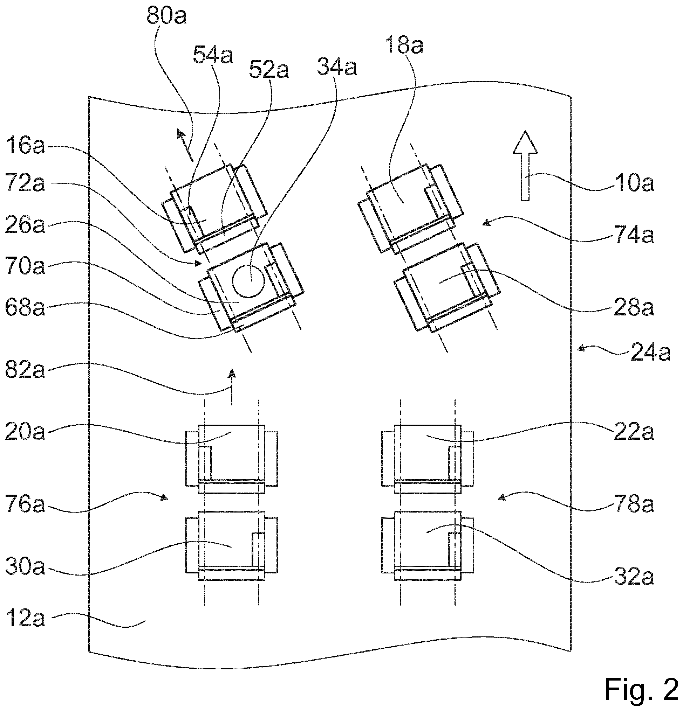

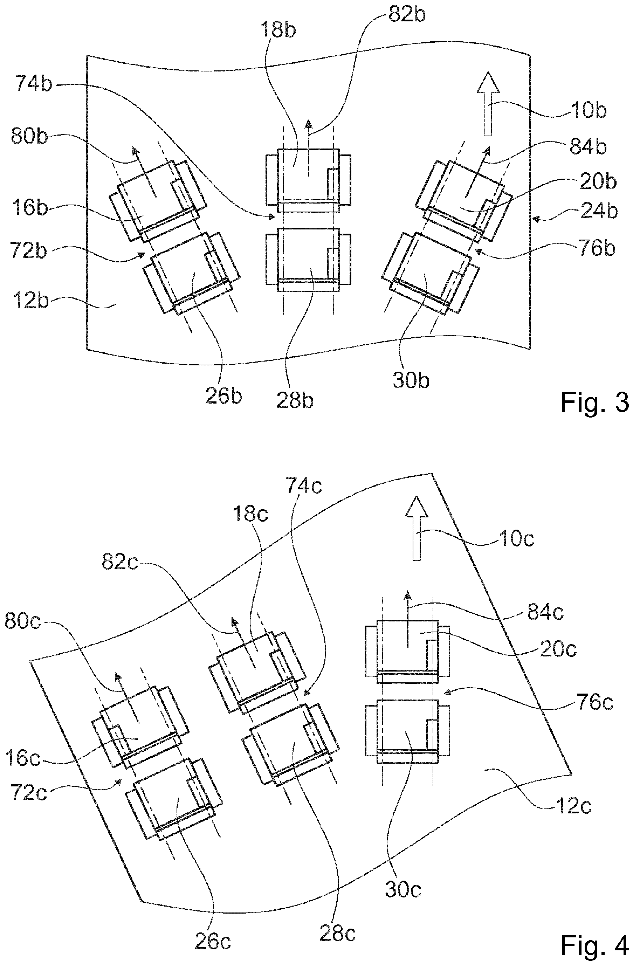

In den Figuren 3 und 4 sind zwei weitere Ausführungsbeispiele der Erfindung gezeigt. Die nachfolgenden Beschreibungen und die Zeichnungen beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung der anderen Ausführungsbeispiele, insbesondere der Fig. 1 und 2, verwiesen werden kann. Zur Unterscheidung der Ausführungsbeispiele ist der Buchstabe a den Bezugszeichen des Ausführungsbeispiels in Fig. 1 und 2 nachgestellt. In den Ausführungsbeispielen der Fig. 3 und 4 ist der Buchstabe a durch die Buchstaben b und c ersetzt.

Figur 3 zeigt eine schematische Darstellung eines Testschlittens 12b für ein erfindungsgemäßes Crashtestverfahren in einem zweiten Ausführungsbeispiel. Das Crashtestverfahren wird auf einer nicht näher dargestellten Testvorrichtung durchgeführt. Die Führungsbahn der Testvorrichtung ist in einer Testrichtung 10b ausgerichtet. Die Testrichtung 10b ist als die Richtung ausgebildet in der die zu testenden Flugzeugsitze beschleunigt werden. Erfindungsgemäß wird der Testschlitten 12b vorgeschlagen. Der Testschlitten 12b ist dazu vorgesehen, auf der Testvorrichtung angebracht zu werden. Der Testschlitten 12b weist ein Grundgestell 14b auf. Das Grundgestell 14b ist von Metallstreben gebildet. Das Grundgestell 14b ist rechteckig ausgebildet. Der Testschlitten 12b weist eine breite Seite und eine schmale Seite auf. Der Testschlitten 12b ist im Gegensatz zum ersten Ausführungsbeispiel mit seiner schmalen Seite parallel zu der Testrichtung 10b ausgerichtet.

Der Testschlitten 12b ist dazu vorgesehen, dass für das Crashtestverfahren mehrere Targetsitze 16b, 18b, 20b auf dem Testschlitten 12b angebunden werden. Zur Anbindung der Targetsitze 16b, 18b, 20b weist der Testschlitten 12b eine Schlittenaufnahme 24b auf. Die Schlittenaufnahme 24b ist dazu vorgesehen, dass die Targetsitze 16b, 18b, 20b fest mit dem Testschlitten 12b verbunden sind. Die Targetsitze 16b, 18b, 20b sind als Einzelsitze ausgebildet. Die Targetsitze 16b, 18b, 20b sind unabhängig voneinander mit der Schlittenaufnahme 24b verbunden. Die als Einzelsitze ausgebildeten Targetsitze 16b, 18b, 20b sind jeweils einzeln und eigenständig auf dem Testschlitten 12b angeordnet. Die Targetsitze 16b, 18b, 20b sind von ihrem Aufbau her im Wesentlichen gleich ausgebildet wie die Targetsitze im ersten Ausführungsbeispiel, weswegen sie im Folgenden nicht näher beschrieben werden sollen.

Der Testschlitten 12b ist dazu vorgesehen, dass für das Crashtestverfahren hinter jedem der Targetsitze 16b, 18b, 20b jeweils ein Launchsitz 26b, 28b, 30b angeordnet ist. Die Launchsitze 26b, 28b, 30b sind dazu vorgesehen, dass für das Crashtestverfahren jeweils ein Crashtestdummy 34b auf ihnen angeordnet wird. Die Launchsitze 26b, 28b, 30b sind im Wesentlichen äquivalent zu dem ersten Ausführungsbeispiel ausgebildet, weswegen sie hier nicht näher beschrieben werden sollen.

Die Schlittenaufnahme 24b ist dazu vorgesehen, dass jeweils ein Targetsitz 16b, 18b, 20b zusammen mit einem Launchsitz 26b, 28b, 30b als ein Paar auf dem Testschlitten 12b angebunden wird. Die Schlittenaufnahme 24b ist dazu vorgesehen, dass die Targetsitze 16b, 18b, 20b in unterschiedlichen Ausrichtungen auf dem Testschlitten 12b angeordnet werden können. Für jedes Paar aus einem Targetsitz 16b, 18b, 20b und einem Launchsitz 26b, 28b, 30b weist die Schlittenaufnahme 24b ein Anbindungsschienenpaar 72b, 74b, 76b auf. Jedes Anbindungsschienenpaar 72b, 74b, 76b weist jeweils zwei parallel verlaufende Anbindungsschienen auf.

Die Targetsitze 16b, 18b, 20b weisen im Unterschied zu dem ersten Ausführungsbeispiel alle unterschiedliche Ausrichtungen auf. Der erste Targetsitz 16b ist mit seinem zugeordneten Launchsitz 26b über das Anbindungsschienenpaar 72b in einer ersten Ausrichtung angeordnet. Der erste Targetsitz 16b ist zur Testrichtung 10b geneigt ausgerichtet. Der Targetsitz 16b weist eine Sitzrichtung 80b auf, die mit der Testrichtung 10b einen Winkel von 10 Grad einschließt. Der zweite Targetsitz 18b ist mit seinem zugeordneten Launchsitz 28b über das Anbindungsschienenpaar 74b in einer zweiten Ausrichtung angeordnet. Der zweite Targetsitz 18b ist parallel zur Testrichtung 10b ausgerichtet. Der zweite Targetsitz 18b weist eine Sitzrichtung 82b auf, die parallel zu der Testrichtung 10b ausgerichtet ist. Der dritte Targetsitz 20b ist mit seinem zugeordneten Launchsitz 30b über das Anbindungsschienenpaar 76b in einer dritten Ausrichtung angeordnet. Die dritte Ausrichtung unterscheidet sich von der ersten Ausrichtung des ersten Targetsitzes 16b und der zweiten Ausrichtung des zweiten Targetsitzes 18b. Der dritte Targetsitz 20b ist zur Testrichtung 10b geneigt ausgerichtet. Der Targetsitz 20b weist eine Sitzrichtung 84b auf, die mit der Testrichtung einen Winkel von 10 Grad einschließt. Der dritte Targetsitz 20b ist dabei in Bezug auf die Testrichtung 10b in eine entgegengesetzte Richtung geneigt wie der erste Targetsitz 16b. Der erste Targetsitz 16b und der dritte Targetsitz 20b sind um einen gleichen Wert zu der Testrichtung 10b geneigt. Die Winkel, um die der erste Targetsitz 16b und der dritte Targetsitz 20b zu der Testrichtung 10b geneigt sind, weisen den gleichen Betrag auf. Grundsätzlich ist es auch denkbar, dass der erste Targetsitz 16b und der dritte Targetsitz 20b um unterschiedlich große Winkel zu der Testrichtung 10b geneigt sind. Alle Targetsitze 16b, 18b, 20b weisen eine Verriegelvorrichtung 54b auf, die jeweils auf der gleichen Seite angeordnet ist.

In dem erfindungsgemäßen Crashtestverfahren werden die drei Targetsitze 16b, 18b, 20b in jeweils unterschiedlichen Ausrichtungen auf dem Testschlitten 12b angeordnet. Durch die drei unterschiedlichen Anordnungen der Targetsitze 16b, 18b, 20b können drei unterschiedliche Zulassungszonen mit einem Crashtest getestet werden.

Figur 4 zeigt eine schematische Darstellung eines Testschlittens 12c für ein erfindungsgemäßes Crashtestverfahren in einem dritten Ausführungsbeispiel. Das Crashtestverfahren wird auf einer nicht näher dargestellten Testvorrichtung durchgeführt. Die Führungsbahn der Testvorrichtung ist in einer Testrichtung 10c ausgerichtet. Die Testrichtung 10c ist als die Richtung ausgebildet, in der die zu testenden Flugzeugsitze beschleunigt werden. Erfindungsgemäß wird der Testschlitten 12c vorgeschlagen. Der Testschlitten 12c ist dazu vorgesehen, auf der Testvorrichtung angebracht zu werden. Der Testschlitten 12c weist ein Grundgestell 14c auf. Das Grundgestell 14c ist von Metallstreben gebildet. Das Grundgestell 14c ist rechteckig ausgebildet. Der Testschlitten 12c weist eine breite Seite und eine schmale Seite auf. Der Testschlitten 12c ist im Gegensatz zu den ersten beiden Ausführungsbeispielen geneigt zu der Testrichtung 10c ausgerichtet.

Der Testschlitten 12c ist dazu vorgesehen, dass für das Crashtestverfahren mehrere Targetsitze 16c, 18c, 20c auf dem Testschlitten 12c angebunden werden. Zur Anbindung der Targetsitze 16c, 18c, 20c weist der Testschlitten 12c eine Schlittenaufnahme 24c auf. Die Schlittenaufnahme 24c ist dazu vorgesehen, dass die Targetsitze 16c, 18c, 20c fest mit dem Testschlitten 12c verbunden sind. Die Targetsitze 16c, 18c, 20c sind als Einzelsitze ausgebildet. Die Targetsitze 16c, 18c, 20c sind unabhängig voneinander mit der Schlittenaufnahme 24c verbunden. Die als Einzelsitze ausgebildeten Targetsitze 16c, 18c, 20c sind jeweils einzeln und eigenständig auf dem Testschlitten 12c angeordnet. Die Targetsitze 16c, 18c, 20c sind von ihrem Aufbau her im Wesentlichen gleich ausgebildet, wie die Targetsitze im ersten Ausführungsbeispiel, weswegen sie im Folgenden nicht näher beschrieben werden sollen.

Der Testschlitten 12c ist dazu vorgesehen, dass für das Crashtestverfahren hinter jedem der Targetsitze 16c, 18c, 20c jeweils ein Launchsitz 26c, 28c, 30c angeordnet ist. Die Launchsitze 26c, 28c, 30c sind dazu vorgesehen, dass für das Crashtestverfahren jeweils ein Crashtestdummy 34c auf ihnen angeordnet wird. Die Launchsitze 26c, 28c, 30c sind im Wesentlichen äquivalent zu dem ersten Ausführungsbeispiel ausgebildet, weswegen sie hier nicht näher beschrieben werden sollen.

Die Schlittenaufnahme 24c ist dazu vorgesehen, dass jeweils ein Targetsitz 16c, 18c, 20c zusammen mit einem Launchsitz 26c, 28c, 30c als ein Paar auf dem Testschlitten 12c angebunden wird. Die Schlittenaufnahme 24c ist dazu vorgesehen, dass die Targetsitze 16c, 18c, 20c in unterschiedlichen Ausrichtungen auf dem Testschlitten 12c angeordnet werden können. Für jedes Paar aus einem Targetsitz 16c, 18c, 20c und einem Launchsitz 26c, 28c, 30c weist die Schlittenaufnahme 24c ein Anbindungsschienenpaar 72c, 74c, 76c auf. Jedes Anbindungsschienenpaar 72c, 74c, 76c weist jeweils zwei parallel verlaufende Anbindungsschienen auf.

Im Unterschied zu den ersten beiden Ausführungsbeispielen weisen die drei Targetsitze 16c, 18c, 20c eine andere Ausrichtung auf. Die Targetsitze 16c, 18c weisen eine gleiche Ausrichtung auf. Die Targetsitze 16c, 18c sind parallel zueinander ausgerichtet. Die beiden Targetsitze 16c, 18c sind geneigt zu der Testrichtung ausgerichtet. Sitzrichtungen 80c, 82c der beiden Targetsitze 16c, 18c schließen jeweils einen Winkel von 10 Grad mit der Testrichtung 10c ein. Die beiden Targetsitze 16c, 18c weisen jeweils eine Verriegelvorrichtung 54c auf. Dabei sind die Verriegelvorrichtungen 54c der beiden Targetsitze 16c, 18c an unterschiedlichen Seiten der Targetsitze 16c, 18c angeordnet. Dadurch können mittels der beiden Targetsitze 16c, 18c bei einem Crashtest zwei Zulassungszonen getestet werden. Der dritte Targetsitz 20c ist in einer anderen Ausrichtung angeordnet als die beiden ersten Targetsitze 16c, 18c. Der dritte Targetsitz 20c ist parallel zu der Testrichtung 10c ausgerichtet. Eine Sitzrichtung 84c des dritten Targetsitzes 20c ist parallel zur Testrichtung 10c ausgerichtet. Dadurch können mittels der drei Targetsitze 16c, 18c, 20c bei einem Crashtest drei Zulassungszonen zeitgleich getestet werden.

### Bezugszeichen

- 10: Testrichtung
- 12: Testschlitten
- 14: Grundgestell
- 16: Targetsitz
- 18: Targetsitz
- 20: Targetsitz
- 22: Targetsitz
- 24: Schlittenaufnahme
- 26: Launchsitz
- 28: Launchsitz
- 30: Launchsitz
- 32: Launchsitz
- 34: Crashtestdummy
- 36: Sitzgestell
- 38: Sitzgestell
- 40: Sitzfußeinheit
- 42: Sitzfußeinheit
- 44: Querträger
- 46: Querträger
- 48: Sitzteiler
- 50: Sitzteiler
- 52: Rückenlehne
- 54: Verriegelvorrichtung
- 56: Sitzfußeinheit
- 58: Sitzfußeinheit
- 60: Querträger
- 62: Querträger
- 64: Sitzteiler
- 66: Sitzteiler
- 68: Rückenlehne
- 70: Sitzboden
- 72: Anbindungsschienenpaar
- 74: Anbindungsschienenpaar
- 76: Anbindungsschienenpaar
- 78: Anbindungsschienenpaar
- 80: Sitzrichtung
- 82: Sitzrichtung
- 84: Sitzrichtung

## Patentansprüche

1. Crashtestverfahren für Flugzeugsitze, in dem ein Testschlitten (12a; 12b; 12c) entlang einer Führungsbahn in einer Testrichtung beschleunigt wird, um starke Beschleunigungen auf Flugzeugsitze und auf Flugzeugsitzen sitzende Passagiere zu simulieren, **dadurch gekennzeichnet, dass** auf dem Testschlitten (12a; 12b; 12c) wenigstens zwei Targetsitze (16a, 18a, 20a, 22a; 16b, 18b, 20b; 16c, 18c, 20c) angeordnet werden, wobei Sitzrichtungen der wenigstens zwei Targetsitze (16a, 18a, 20a, 22a; 16b, 18b, 20b; 16c, 18c, 20c) unterschiedliche Winkel zu der Testrichtung aufweisen.

2. Crashtestverfahren nach Anspruch 1, **dadurch gekennzeichnet, dass** auf dem Testschlitten (12a; 12b; 12c) wenigstens ein als Einzelsitz ausgebildeter Targetsitz (16a, 18a, 20a, 22a; 16b, 18b, 20b; 16c, 18c, 20c) angeordnet wird.

3. Crashtestverfahren nach Anspruch 1 oder 2, **dadurch gekennzeichnet, dass** auf dem Testschlitten (12a; 12b; 12c) wenigstens drei als Einzelsitze ausgebildete Targetsitze (16a, 18a, 20a, 22a; 16b, 18b, 20b; 16c, 18c, 20c) angeordnet werden, die wenigstens zwei unterschiedliche Ausrichtungen aufweisen.

4. Crashtestverfahren nach einem der vorhergehenden Ansprüche, **dadurch gekennzeichnet, dass** die als Einzelsitze ausgebildeten Targetsitze (16a, 18a, 20a, 22a; 16b, 18b, 20b; 16c, 18c, 20c) ein standardisiertes Sitzgestell (36a) aufweisen.

5. Crashtestverfahren nach einem der vorhergehenden Ansprüche, **dadurch gekennzeichnet, dass** hinter einem als Einzelsitz ausgebildeten Targetsitz (16a, 18a, 20a, 22a; 16b, 18b, 20b; 16c, 18c, 20c) je ein einzelner Launchsitz (26a, 28a, 30a, 32a; 26b, 28b, 30b; 26c, 28c, 30c) angeordnet wird.

6. Crashtestverfahren nach Anspruch 5, **dadurch gekennzeichnet, dass** der Launchsitz (26a, 28a, 30a, 32a; 26b, 28b, 30b; 26c, 28c, 30c) ein standardisiertes, insbesondere versteiftes Sitzgestell (38a) aufweist.

7. Crashtestverfahren nach Anspruch 5 oder 6, **dadurch gekennzeichnet, dass** ein Launchsitz (26a, 28a, 30a, 32a; 26b, 28b, 30b; 26c, 28c, 30c) wiederverwendet werden kann.

8. Crashtestverfahren nach einem der vorhergehenden Ansprüche, **dadurch gekennzeichnet, dass** auf dem Testschlitten 12a) wenigstens zwei hintereinander angeordnete Paare von Targetsitzen (16a, 18a, 20a, 22a) und Launchsitzen (26a, 28a, 30a, 32a) angeordnet werden, die unterschiedliche Ausrichtungen aufweisen.

9. Testvorrichtung mit einer Führungsbahn und mit einem entlang der Führungsbahn verschiebbaren Testschlitten für ein Crashverfahren nach einem der vorhergehenden Ansprüche, wobei der Testschlitten entlang der Führungsbahn in einer Testrichtung beschleunigbar ist, und mit mehreren Targetsitzen, die fest auf dem Testschlitten montiert sind, **dadurch gekennzeichnet, dass** der Testschlitten wenigstens eine Schlittenaufnahme (24a; 24b; 24C) aufweist, auf der die wenigstens zwei Targetsitze (16a, 18a, 20a, 22a; 16b, 18b, 20b; 16c, 18c, 20c) montiert sind, wobei Sitzrichtungen der wenigstens zwei Targetsitze (16a, 18a, 20a, 22a; 16b, 18b, 20b; 16c, 18c, 20c) jeweils unterschiedliche Winkel zu der Testrichtung aufweisen.

10. Testvorrichtung nach Anspruch 9, **dadurch gekennzeichnet, dass** die Schlittenaufnahme (24a) dazu vorgesehen ist, wenigstens zwei Paare von Targetsitzen (16a, 18a, 20a, 22a) und Launchsitzen (26a, 28a, 30a, 32a) hintereinander in unterschiedlichen Ausrichtungen anzubinden.

## Claims

1. Crash test method for aircraft seats, in which a test carriage (12a; 12b; 12c) is accelerated along a guide path in a test direction in order to simulate strong accelerations acting onto aircraft seats and onto passengers sitting on aircraft seats,
**characterised in that** at least two target seats (16a, 18a, 20a, 22a; 16b, 18b, 20b; 16c, 18c, 20c) are arranged on the test carriage (12a; 12b; 12c), wherein sitting directions of the at least two target seats (16a, 18a, 20a, 22a; 16b, 18b, 20b; 16c, 18c, 20c) include different angles with the test direction.

2. Crash test method according to claim 1,
**characterised in that** at least one target seat (16a, 18a, 20a, 22a; 16b, 18b, 20b; 16c, 18c, 20c) implemented as an individual seat is arranged on the test carriage (12a; 12b; 12c).

3. Crash test method according to claim 1 or 2,
**characterised in that** at least three target seats (16a, 18a, 20a, 22a; 16b, 18b, 20b; 16c, 18c, 20c) implemented as individual seats, which have at least two different orientations, are arranged on the test carriage (12a; 12b; 12c).

4. Crash test method according to one of the preceding claims,
**characterised in that** the target seats (16a, 18a, 20a, 22a; 16b, 18b, 20b; 16c, 18c, 20c) implemented as individual seats have a standardized seat frame (36a).

5. Crash test method according to one of the preceding claims,
**characterised in that** respectively one individual launch seat (26a, 28a, 30a, 32a; 26b, 28b, 30b; 26c, 28c, 30c) is arranged behind a target seat (16a, 18a, 20a, 22a; 16b, 18b, 20b; 16c, 18c, 20c) implemented as an individual seat.

6. Crash test method according to claim 5,
**characterised in that** the launch seat (26a, 28a, 30a, 32a; 26b, 28b, 30b; 26c, 28c, 30c) comprises a standardized, in particular reinforced, seat frame (38a).

7. Crash test method according to claim 5 or 6,
**characterised in that** a launch seat (26a, 28a, 30a, 32a; 26b, 28b, 30b; 26c, 28c, 30c) is reusable.

8. Crash test method according to one of the preceding claims,
**characterised in that** at least two pairs of target seats (16a, 18a, 20a, 22a) and launch seats (26a, 28a, 30a, 32a) placed behind each other, which have different orientations, are arranged on the test carriage (12a).

9. Test device, with a guide path and with a test carriage that is displaceable along the guide path, for a crash method according to one of the preceding claims, wherein the test carriage can be accelerated along the guide path in a test direction, and with a plurality of target seats which are fixedly mounted on the test carriage,
**characterised in that** the test carriage comprises at least one carriage receptacle (24a; 24b; 24c) which the at least two target seats (16a, 18a, 20a, 22a; 16b, 18b, 20b; 16c, 18c, 20c) are mounted on, wherein sitting directions of the at least two target seats (16a, 18a, 20a, 22a; 16b, 18b, 20b; 16c, 18c, 20c) include respectively different angles with the test direction.

10. Test device according to claim 9,
**characterised in that** the carriage receptacle (24a) is configured to connect at least two pairs of target seats (16a, 18a, 20a, 22a) and launch seats (26a, 28a, 30a, 32a) behind each other in different orientations.

## Revendications

1. Procédé crashtest pour des sièges d'avion, dans lequel un chariot de test (12a ; 12b ; 12c) est accéléré le long d'une voie de guidage dans une direction de test pour une simulation des accélérations fortes agissant sur des sièges d'avion et sur des passagers assis sur des sièges d'avion,
**caractérisé en ce qu'**au moins deux sièges target (16a, 18a, 20a, 22a ; 16b, 18b, 20b ; 16c, 18c, 20c) sont disposés sur le chariot de test (12a ; 12b ; 12c), des directions d'assise des au moins deux sièges target (16a, 18a, 20a, 22a ; 16b, 18b, 20b ; 16c, 18c, 20c) ayant des angles différents par rapport à la direction de test.

2. Procédé crashtest selon la revendication 1,
**caractérisé en ce qu'**au moins un siège target (16a, 18a, 20a, 22a ; 16b, 18b, 20b ; 16c, 18c, 20c) réalisé comme siège individuel est disposé sur le chariot de test (12a; 12b; 12c).

3. Procédé crashtest selon la revendication 1 ou 2,
**caractérisé en ce qu'**au moins trois sièges target (16a, 18a, 20a, 22a ; 16b, 18b, 20b ; 16c, 18c, 20c) réalisés comme sièges individuels, qui ont au moins deux orientations différentes, sont disposés sur le chariot de test (12a ; 12b ; 12c).

4. Procédé crashtest selon l'une des revendications précédentes,
**caractérisé en ce que** les sièges target (16a, 18a, 20a, 22a ; 16b, 18b, 20b ; 16c, 18c, 20c) réalisés comme sièges individuels comportent un cadre de siège (36a) standardisé.

5. Procédé crashtest selon l'une des revendications précédentes,
**caractérisé en ce que** respectivement un siège à lancement individuel (26a, 28a, 30a, 32a ; 26b, 28b, 30b ; 26c, 28c, 30c) est disposé derrière un siège target (16a, 18a, 20a, 22a ; 16b, 18b, 20b ; 16c, 18c, 20c) réalisé comme siège individuel.

6. Procédé crashtest selon la revendication 5,
**caractérisé en ce que** le siège à lancement individuel (26a, 28a, 30a, 32a ; 26b, 28b, 30b ; 26c, 28c, 30c) comprend un cadre de siège (38a) standardisé, en particulier raidi.

7. Procédé crashtest selon la revendication 5 ou 6,
**caractérisé en ce qu'**un siège à lancement (26a, 28a, 30a, 32a ; 26b, 28b, 30b ; 26c, 28c, 30c) peut être ré-utilisé.

8. Procédé crashtest selon l'une des revendications précédentes, **caractérisé en ce qu'**au moins deux paires de sièges target (16a, 18a, 20a, 22a) et de fauteuils d'appoint (26a, 28a, 30a, 32a) agencées l'une derrière l'autre et ayant des orientations différentes sont disposées sur le chariot de test (12a),.

9. Dispositif de test
avec une voie de guidage
et avec un chariot de test déplaçable le long de la voie de guidage, pour un procédé crash selon l'une des revendications précédentes, où le chariot de test peut être accéléré le long de la voie de guidage dans une direction de test, et avec plusieurs sièges target montés fixement sur le chariot de test, **caractérisé en ce que** le chariot de test comprend au moins un réceptacle de chariot (24a ; 24b ; 24c) sur lequel les au moins deux sièges target (16a, 18a, 20a, 22a ; 16b, 18b, 20b ; 16c, 18c, 20c) sont montés,
des directions d'assise des au moins deux sièges target (16a, 18a, 20a, 22a ; 16b, 18b, 20b ; 16c, 18c, 20c) ayant respectivement angles différents par rapport à la direction de test.

10. Dispositif de test selon la revendication 9,
**caractérisé en ce que** le réceptacle de chariot (24a) est prévu à raccorder au moins deux paires de sièges target (16a, 18a, 20a, 22a) et de fauteuils d'appoint (26a, 28a, 30a, 32a) l'une derrière l'autre dans des orientations différentes.
